# EUROPEAN PATENT APPLICATION

(11) **EP 4 428 595 A1**
(43) Date of publication of application: **11.09.2024**
(21) Application number: 24161762.0
(22) Date of filing: 06.03.2024
(51) Int. Cl.: G02B 6/44, H02G 15/013

(54) **CABLE SEALING DEVICES AND SYSTEMS**

(30) Priority: 07.03.2023 US 202363450415 P
(71) Applicant: Corning Research & Development Corporation, Corning, New York 14831 (US)
(72) Inventor: KRECZMER, Wojciech, 91-849 Lodz (PL); RUDA, Michal, 95-060 Brzeziny (PL)
(74) Representative: Reddie & Grose LLP

(57) **Abstract**

Systems, assemblies, and methods for sealing a cable within a terminal are provided herein. A cable sealing device includes a sealing element assembly having a slit and two openings, the openings being on opposing sides of the slit. The cable sealing device also includes crimp elements disposed within the openings, such that when an attached lever is engaged, the crimp elements move towards the slit and seal one or more cables that are disposed within the slit.

## Description

### PRIORITY APPLICATION

This application claims the benefit of priority of U.S. Provisional Application No. 63/450,415, filed on March 7, 2023, the content of which is relied upon and incorporated herein by reference in its entirety.

### FIELD OF THE DISCLOSURE

Embodiments of the present disclosure relate generally to network communications equipment and, more particularly, to cable sealing devices and systems for cable or fiber management, such as within communications equipment cabinets and other enclosures.

### BACKGROUND OF THE DISCLOSURE

Cables (such as used to carry communication fiber) are often routed in and out of communications equipment cabinets and other enclosures in order to connect with various communications equipment. The cables are often sealed at the entry point(s) into the enclosures to maintain a certain arrangement, and in some cases, to provide added stability. Current sealing mechanisms include cable glands, rubber membranes, or other sealing structures that require dedicated (or aligned) dimensions for specifically used cable types and diameters.

### BRIEF SUMMARY OF THE DISCLOSURE

In an optical network, fiber optic feeder or distribution cables are routed and connected to terminals (*e.g.*, network access point enclosures, optical network terminals, network interface devices, etc.). At these connection or distribution points, fiber optic equipment enclosures are provided to house the connection of the fiber optic cable to the fiber optic equipment inside. During maintenance and/or initial setup, installation personnel (*e.g.*, installers) may feed a length of fiber optic cable into the enclosure and then seal the fiber optic cable within a port. Typically, the sealing mechanism used to seal the fiber optic cable in this way is dimension specific. Additionally, special accessory elements are often necessary for applying such seals to the fiber optic cable during installation. Thus, many different sealing mechanisms and/or sealing elements may be necessary to seal multiple different cables within the port of an enclosure. The complexity of this sealing task may be too costly and arduous, and thus proper procedures may be disregarded, resulting in faulty installation (which may cause damage and/or signal loss within the optical network).

Embodiments of the present disclosure provide for various cable sealing devices that cure many of the above noted defects and difficulties. In this regard, various embodiments of the present disclosure provide a simple, effective way to ensure that cables may be properly sealed or secured within an enclosure to improve the reliability of connections and/or terminals within a network. In some embodiments, the cable sealing devices are capable of sealing multiple cables of differing diameters using the same sealing element assembly. In some embodiments, a cable sealing device may include a sealing element assembly with slits for a number of cables and may be customized to secure a range of cable diameters-thereby offering versatility in cable sizes that can be secure. Multiple assemblies may be utilized in one cabinet or enclosure.

In an example embodiment, a device is provided for sealing a cable within a terminal. The device includes a sealing element assembly having a first end and a second end, the second end being opposite the first end. The sealing element assembly includes a slit extending from the first end at least partially toward the second end, and the slit is configured to receive the cable therethrough. The sealing element also includes a first opening on a first side of the slit and a second opening on a second side of the slit. The device also includes a first crimp element with a first end disposed within the first opening, a second crimp element with a first end disposed within the second opening, and a lever positioned on a first side of the sealing element assembly opposite the terminal. The lever is movable between an unsealed position and a sealed position, and the lever defines at least one lever body that when moved to the sealed position contacts at least one of the first crimp element or the second crimp element so as to cause at least one of the first end of the first crimp element or the first end of the second crimp element to move in a direction that is towards the slit so as to engage with the cable to thereby seal the cable within the slit of the sealing element assembly.

In some embodiments, when the lever is moved to the sealed position, the first end of the first crimp element and the first end of the second crimp element may move toward each other to engage with the cable to thereby seal the cable within the slit of the sealing element assembly.

In some embodiments, the lever may further include a first lever body and a second lever body. The first lever body may have a first end adjacent to the second end of the first crimp element, and the second lever body may have a first end adjacent to the second end of the second crimp element. A second end of the first lever body opposite the first end of the first lever body and a second end of the second lever body opposite the first end of the second lever body may move upwards to cause the lever to move from the unsealed position to the sealed position to cause the first end of the first lever body to interact with the second end of the first crimp element to force the first end of the first crimp element to move toward the slit and to cause the first end of the second lever body to interact with the second end of the second crimp element to force the first end of the second crimp element to move toward the slit.

In some embodiments, the first lever body and the second lever body may be positioned with respect to each other such that the first end of the first lever body and the first end of the second lever body are closer together than are the second end of the first lever body and the second end of the second lever body.

In some embodiments, the device may further include a first frame and a second frame, and the sealing element assembly may be disposed between the first frame and the second frame. The first frame may be connectable to the second frame, and the first crimp element, the second crimp element, and the lever may be supported by the first frame.

In some embodiments, the first frame may define a shoulder, and at least one of the first crimp element or the second crimp element may be configured to rotate about the shoulder.

In some embodiments, the sealing element assembly may have a first portion and a second portion.

In some embodiments, the slit may extend through the first portion and the second portion of the sealing element assembly, and the first opening and the second opening may extend through the first portion of the sealing element assembly.

In some embodiments, the first opening and the second opening may be parallel.

In some embodiments, the first opening, the second opening, and the slit may be parallel.

In some embodiments, the slit of the sealing element assembly may be further configured to receive a plurality of cables therealong, and the lever may be configured such that, when the lever is moved to the sealed position, the first end of the first crimp element and the first end of the second crimp element move toward each other to engage with the plurality of cables to thereby seal the plurality of cables within the slit of the sealing element assembly.

In some embodiments, each cable within the plurality of cables may have a different diameter. The first end of the first crimp element may include a first plurality of cutouts, and the first end of the second crimp element may include a second plurality of cutouts. The first plurality of cutouts and the second plurality of cutouts may allow for different levels of compression along a length of the slit to account for sealing cables with different diameters positioned within the slit.

In some embodiments, the sealing element assembly may be comprised of foam or rubber material.

In some embodiments, the first crimp element, the second crimp element, and the lever may be comprised of metal or plastic material.

In some embodiments, the cable may be a multi-fiber cable.

In some embodiments, the cable may be removable from the sealing element assembly after the lever has been moved into the unsealed position.

In some embodiments, the cable may have a diameter that is between 2 and 8 millimeters.

In some embodiments, the device may be mountable on an enclosure.

In another example embodiment, a device is provided for sealing a plurality of cables within a terminal. The plurality of cables have different diameters, and the device includes a sealing element assembly having a first end and a second end, the second end being opposite the first end. The sealing element assembly includes a first slit extending from the first end at least partially toward the second end, and the first slit is configured to receive a first one or more cables of the plurality of cables therethrough. The sealing element assembly also includes a first opening on a first side of the first slit and a second opening on a second side of the first slit. The device also includes a first crimp element with a first end disposed within the first opening, a second crimp element with a first end disposed within the second opening, and a first lever positioned on a first side of the sealing element assembly opposite the terminal. The first lever is movable between a first unsealed position and a first sealed position, and the first lever defines at least one first lever body that when moved to the first sealed position contacts at least one of the first crimp element or the second crimp element so as to cause at least one of the first end of the first crimp element or the first end of the second crimp element to move in a direction that is towards the first slit so as to engage with the first one or more cables of the plurality of cables to thereby seal the first one or more cables of the plurality of cables within the first slit of the sealing element assembly.

In some embodiments, the sealing element assembly may further include a second slit extending from the first end at least partially toward the second end, and the second slit may be configured to receive a second one or more cables of the plurality of cables therein through the first end. The sealing element assembly may also include a third opening on a first side of the second slit and a fourth opening on a second side of the second slit. The device may further include a third crimp element with a first end disposed within the third opening, a fourth crimp element with a first end disposed within the fourth opening, and a second lever positioned on the first side of the sealing element assembly opposite the terminal. The second lever may be movable between a second unsealed position and a second sealed position, and the second lever may define at least one second lever body that when moved to the second sealed position contacts at least one of the third crimp element or the fourth crimp element so as to cause at least one of the first end of the third crimp element or the first end of the fourth crimp element to move in a direction that is towards the second slit to engage with the second one or more cables of the plurality of cables to thereby seal the second one or more cables of the plurality of cables within the second slit of the sealing element assembly.

In some embodiments, the device may be capable of sealing at least six cables within at least one of the first slit or the second slit.

In some embodiments, the first lever and the second lever may be movable independent of each other.

In another example embodiment, an enclosure is provided. The enclosure includes a terminal disposed within the enclosure, and a cable is connected to the terminal. The enclosure also includes a device positioned on or within the enclosure for supporting the cable. The device includes a sealing element assembly having a first end and a second end, the second end being opposite the first end. The sealing element assembly includes a slit extending from the first end at least partially down toward the second end, and the slit is configured to receive the cable therethrough. The sealing element assembly also includes a first opening on a first side of the slit and a second opening on a second side of the slit. The device also includes a first crimp element with a first end disposed within the first opening, a second crimp element with a first end disposed within the second opening, and a lever positioned on a first side of the sealing element assembly opposite the terminal. The lever is movable between an unsealed position and a sealed position, and the lever defines at least one lever body that when moved to the sealed position contacts at least one of the first crimp element and the second crimp element so as to cause at least one of the first end of the first crimp element and the first end of the second crimp element to move in a direction that is towards the slit so as to engage with the cable to thereby seal the cable within the slit of the sealing element assembly.

In some embodiments, the device may be within the enclosure.

In another example embodiment, a method of manufacturing a device for sealing a cable within a terminal is provided. The method includes providing a sealing element assembly having a first end and a second end, the second end being opposite the first end. The sealing element assembly includes a slit extending from the first end at least partially down toward the second end, and the slit is configured to receive the cable therethrough. The sealing element assembly also includes a first opening on a first side of the slit and a second opening on a second side of the slit. The method also includes positioning a first crimp element with a first end within the first opening, positioning a second crimp element with a first end within the second opening, and positioning a lever on a first side of the sealing element assembly opposite the terminal. The lever is movable between an unsealed position and a sealed position, and the lever defines at least one lever body that when moved to the sealed position contacts at least one of the first crimp element and the second crimp element so as to cause at least one of the first end of the first crimp element and the first end of the second crimp element to move in a direction that is towards the slit so as to engage with the cable to thereby seal the cable within the slit of the sealing element assembly.

Additional features and advantages will be set forth in the detailed description which follows, and in part will be readily apparent to those skilled in the art from the description or recognized by practicing the embodiments as described in the written description and claims hereof, as well as the appended drawings.

It is to be understood that both the foregoing general description and the following detailed description are merely exemplary and are intended to provide an overview or framework to understand the nature and character of the claims.

### BRIEF DESCRIPTION OF THE DRAWINGS

Having thus described embodiments of the present disclosure in general terms, reference will now be made to the accompanying drawings, which are not necessarily drawn to scale, and wherein:
FIG. 1 illustrates an example communications equipment cabinet assembly including example cable sealing devices, in accordance with some embodiments discussed herein;
FIG. 2 illustrates an example cable sealing device, in accordance with some embodiments discussed herein;
FIG. 3 shows an exploded view of the example cable sealing device of FIG. 2, in accordance with some embodiments discussed herein;
FIG. 4 shows a front view of a first portion of the sealing element assembly of the example cable sealing device of FIGs. 2-3, in accordance with some embodiments discussed herein;
FIG. 5 shows a front view of a second portion of the sealing element assembly of the example cable sealing device of FIGs. 2-3, in accordance with some embodiments discussed herein;
FIG. 6A shows a perspective view of a first lever and a second lever of the example cable sealing device of FIGs. 2-3, in accordance with some embodiments discussed herein;
FIG. 6B shows a top view of the first lever and the second lever of the example cable sealing device of FIGs. 2-3, in accordance with some embodiments discussed herein;
FIG. 7 shows a perspective view of a first crimp element and a second crimp element of the example cable sealing device of FIGs. 2-3, in accordance with some embodiments discussed herein;
FIG. 8 shows a perspective view of a first frame and a second frame of the example cable sealing device of FIGs. 2-3, in accordance with some embodiments discussed herein;
FIG. 9A illustrates the example cable sealing device of FIGs. 2-3, with all levers in an unsealed position, in accordance with some embodiments discussed herein;
FIG. 9B illustrates the example cable sealing device of FIGs. 2-3 and 9A, with one of the levers in a sealed position, in accordance with some embodiments discussed herein;
FIG. 10 shows a top view of the example cable sealing device of FIG. 9B, in accordance with some embodiments discussed herein;
FIG. 11 shows a back perspective view of the example cable sealing device of FIG. 10, in accordance with some embodiments discussed herein;
FIG. 12 shows the example cable sealing device of FIG. 10, where cables of varying diameters are illustrated as being securable using the same slit of the cable sealing device, in accordance with some embodiments discussed herein; and
FIG. 13 illustrates a flowchart for an example method of manufacturing a cable sealing device, in accordance with some embodiments discussed herein.

### DETAILED DESCRIPTION

Exemplary embodiments of the present disclosure will be described more fully hereinafter with reference to the accompanying drawings, in which some, but not all embodiments of the present disclosure are shown. Indeed, the present disclosure may be embodied in many different forms and should not be construed as limited to the exemplary embodiments set forth herein; rather, these embodiments are provided so that this disclosure will satisfy applicable legal requirements. Like reference numerals refer to like elements throughout.

Assemblies and systems according to the present disclosure allow an installer to configure cables and/or other communications equipment in an improved manner, such as by enabling the installer to organize and secure cables using one or more cable sealing devices. In this regard, in some embodiments, example cable sealing devices may be able to seal multiple cables having different or equal diameters. Further, in some embodiments, example cable sealing devices may additionally prevent axial torsion (*e.g.*, pulling forces) from damaging the cables and/or the communications equipment at the point of connection.

The presently described assemblies may provide improved compliance by offering a simple method of securing cables within the interior of communications equipment cabinets or other enclosures. This can prevent or limit signal loss as well as protect the integrity of the entire network.

Further, the presently described assemblies and systems incorporate simple management and organization of the cables into its design. The precise and consistent grouping of cables in the cable sealing device allows the installer to order the cables in a kempt matter. The arrangement of cables in the cable sealing device avoids cluttering the enclosures and/or tangling of the cables. In addition, the presently described assemblies may facilitate ease of access. Authorized personnel may also make changes to the communications equipment setup relatively easily. Similarly, cables may be sealed and unsealed easily.

Due in part to its extremely wide bandwidth and low noise operation, optical fiber is increasingly being used for a variety of applications, including but not limited to broadband voice, video, and data transmission. Fiber optic communications networks may include a number of interconnection points (such as at which multiple optical fibers are interconnected) and/or connection terminals (*e.g.*, network access point (NAP) enclosures, optical network terminals (ONTs), network interface devices (NIDs)). Connection terminals may include ports and be used to establish optical connections between optical fibers terminated from the distribution cable and respective optical fibers of drop cables, extended distribution cables, tether cables, and/or branch cables.

The connection terminals may be used to extend fiber optic communications services to a subscriber. In this regard, fiber optic networks may deliver "fiber-to-the-curb" (FTTC), "fiber-to-the-business" (FTTB), "fiber-to-the-home" (FTTH) and "fiber-to-the-premises" (FTTP), referred to generically as "FTTx". For example, delivering services to subscribers in the last mile connection may occur indoors. Different kinds of buildings may require complicated cabling systems, which can include many separated cables, each one connecting one subscriber. Installation may include making each of the many separated cables connect between a main distribution point (*e.g.*, in the basement or elsewhere in the building) and the end user. Each connection may require a different length and/or diameter of cable, so variations in cable tensions and routing may introduce further tangling or complexities into what may be an already crowded enclosure. Moreover, modifications after initial installation may be required (*e.g.*, due to building or subscriber changes), requiring the installer to re-enter the enclosure and quickly make adjustments to cables or fibers within, which may cause axial strain on cables during cable management activities.

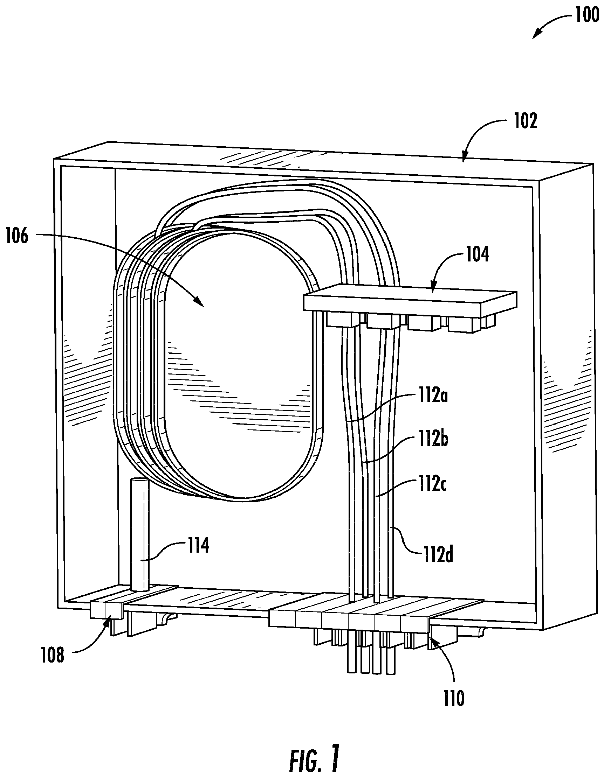

FIG. 1 illustrates an example communications equipment cabinet assembly 100 including an enclosure 102 with cables 114 and 112a, 112b, 112c, and 112d secured by cable sealing devices 108 and 110, respectively. The cables may be fiber optic feeder cables, bundling multiple fibers for carrying optical signals, for example, or any other cables, wires, lead, cords, etc. The cables 114 and 112a, 112b, 112c, and 112d may enter the enclosure 102 through a cable sealing device such as cable sealing devices 108 and 110 and may then be routed through the enclosure 102 (e.g., through panel 104 (e.g., a terminal)) to connect with various communications equipment. The cable sealing devices 108 and 110 are shown at the bottom of the enclosure 102 in FIG. 1, but it will be appreciated that the cable sealing devices 108 and 110 may be located at any location on or within the enclosure 102, such as at the top or on a side of the enclosure 102, or within the enclosure, such as proximate the panel 104. The communications equipment may be fiber optic equipment such as trays (*e.g.*, splice and splitter trays) and/or modules (*e.g.*, splitter modules), for example. Example splice trays 106 are shown in FIG. 1. The cable sealing devices 108 and 110 are configured such that compression forces are applied to one or more cables placed within the device so that cables with varying diameters are sealed within the port at a proper tightness. In addition to sealing the cables 114 and 112a, 112b, 112c, and 112d in specific positions with respect to the enclosure 102, the cable sealing devices 108 and 110 may also provide protection from any potential damage and/or signal loss due to any axial torsion that may be applied to the cables 114 and 112a, 112b, 112c, and 112d.

As described in more detail below, an installer may position each of the cables 114 and 112a, 112b, 112c, and 112d within certain slits of the cable sealing devices 108 and 110. Then the installer may then engage one or more levers to transition the lever(s) from an unsealed position to a sealed position, which causes the cable sealing devices 108 and 110 to seal the cables 114 and 112a, 112b, 112c, and 112d within sealing element assemblies of the cable sealing devices 108 and 110. The forces acting on both the cable 114 and the individual components of the cable sealing devices 108 and 110 as a result of the installer engaging the one or more levers may assist in maintaining the cables 114 and 112a, 112b, 112c, and 112d in a secure arrangement.

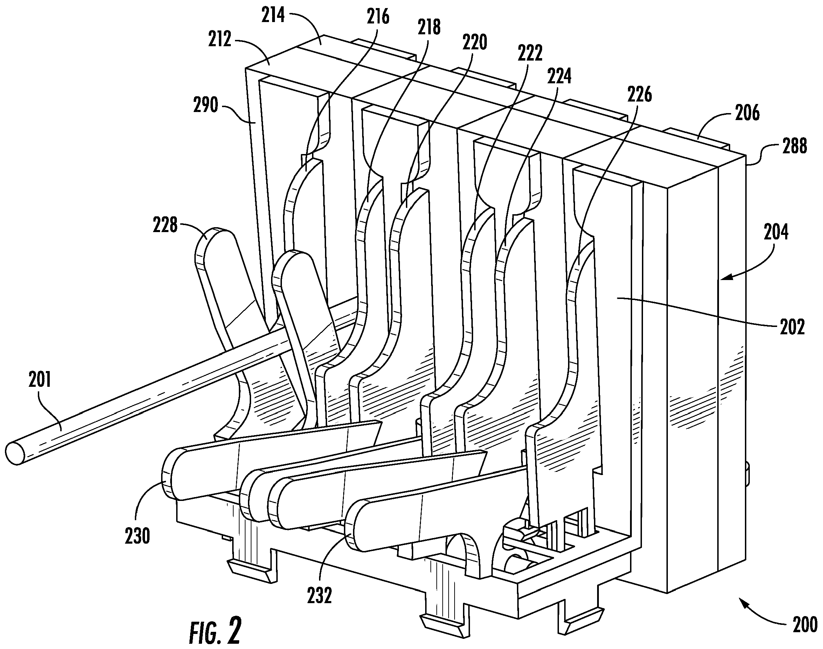

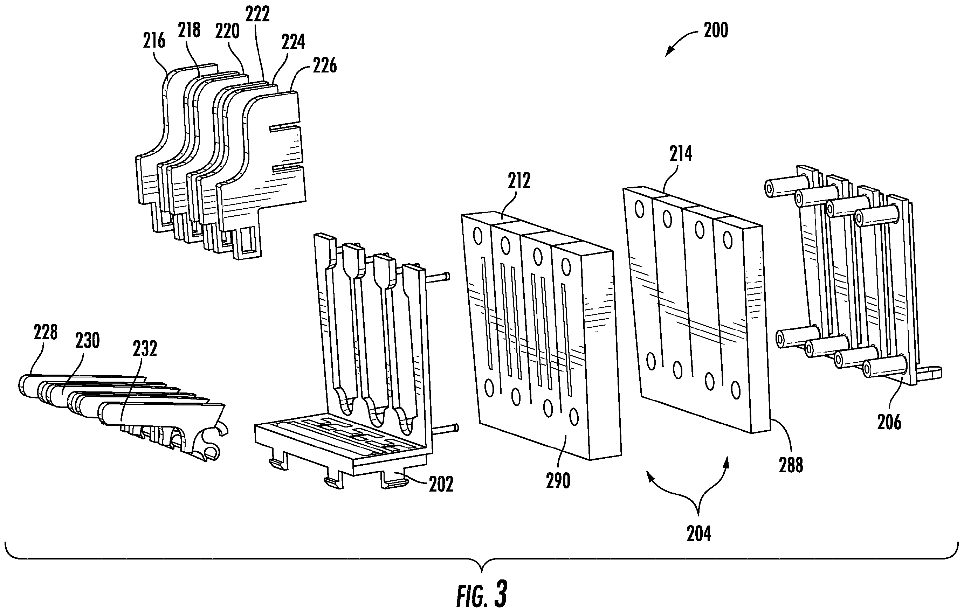

FIGs. 2-3 show an example cable sealing device 200 similar to cable sealing devices 108 and 110 shown in FIG. 1. As best shown in the exploded view of FIG. 3, the cable sealing device 200 comprises a sealing element assembly 204. In some embodiments, the sealing element assembly 204 may be comprised of a first portion 212 and a second portion 214. However, in other embodiments, the sealing element assembly 204 may have only one portion or may have more than two portions. In some embodiments, the cable sealing device 200 may also include a first frame 202 and a second frame 206. The first frame 202 and the second frame 206 may fit together through or around the sealing element assembly 204, such as shown in FIG. 2. The cable sealing device 200 may also include a plurality of crimp elements that are designed to fit within slits of the sealing element assembly 204. For example, the cable sealing device 200 comprises a first crimp element 216, a second crimp element 218, a third crimp element 220, a fourth crimp element 222, a fifth crimp element 224, and a sixth crimp element 226. The cable sealing device 200 also includes a plurality of levers that are each designed to interact with at least one of the plurality of crimp elements. For example, lever 228 is designed to interact with at least one of the first crimp element 216 or the second crimp element 218. Lever 230 is designed to interact with at least one of the third crimp element 220 or the fourth crimp element 222. Lever 232 is designed to interact with at least one of the fifth crimp element 224 or the sixth crimp element 226.

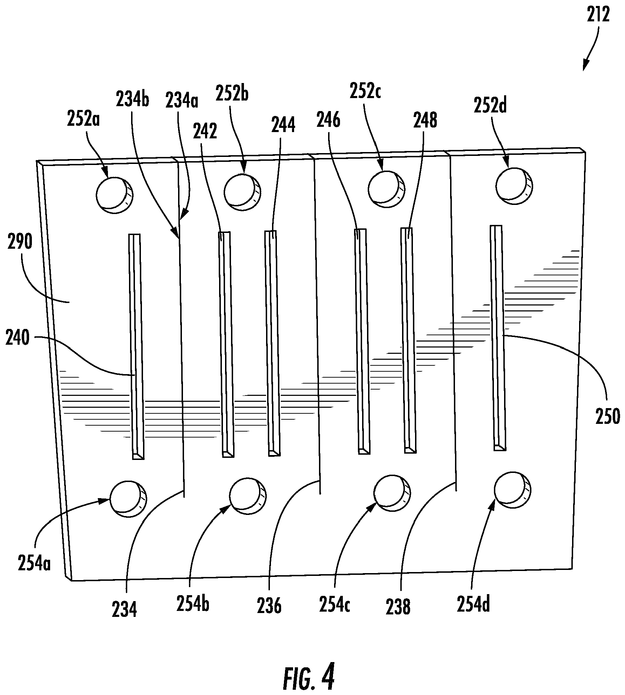

FIG. 4 shows an isolated view of the first portion 212 of the sealing element assembly 204 of the cable sealing device 200 shown in FIGs. 2-3. The first portion 212 may be comprised of foam or soft rubber, or any other material that facilitates a proper seal. The first portion 212 comprises slits 234, 236, and 238 extending at least partially down the first portion 212 and configured to receive one or more cables. On a first side 234a of the slit 234 is a first opening 242 configured to receive the second crimp element 218. On a second side 234b of the slit 234 is a second opening 240 configured to receive the first crimp element 216. In some embodiments, the first opening 242 and the second opening 240 may be parallel. Further, in some embodiments, the first opening 242, the second opening 240, and the slit 234 may be parallel. Similarly, third opening 246 and fourth opening 244 are positioned on opposite sides of slit 236 to receive the fourth crimp element 222 and the third crimp element 220, respectively, and fifth opening 250 and sixth opening 248 are positioned on opposite sides of slit 238 to receive the sixth crimp element 226 and the fifth crimp element 224, respectively. The first portion 212 may, in other embodiments, include more or less slits and/or openings.

Still referring to FIG. 4, the first portion 212 also comprises a first plurality of holes 252a, 252b, 252c, and 252d and a second plurality of holes 254a, 254b, 254c, and 254d. The first plurality of holes 252a, 252b, 252c, and 252d and the second plurality of holes 254a, 254b, 254c, and 254d may be configured to receive the first frame 202, as shown in FIG. 2. In other embodiments, the first portion 212 may not have any holes, and the first portion 212 may interact with the first frame 202 in any other way. In other embodiments, the cable sealing device 200 may not have a first frame at all.

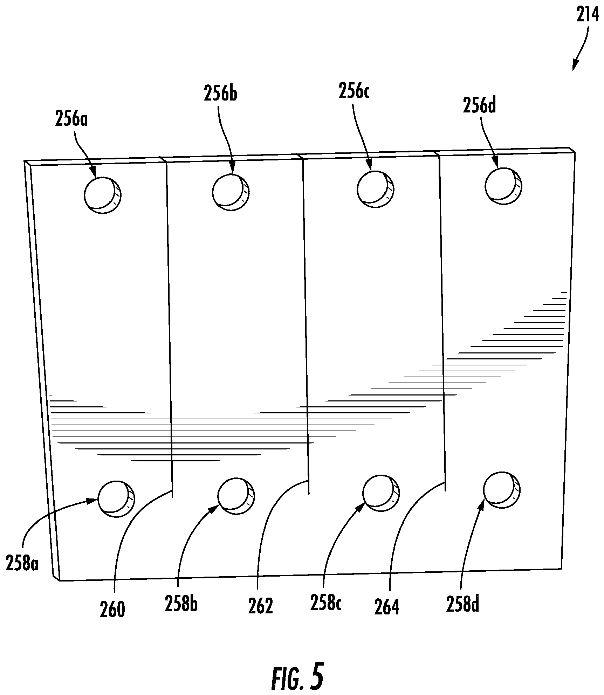

FIG. 5 shows an isolated view of the second portion 214 of the sealing element assembly 204 of the cable sealing device 200 shown in FIGs. 2-3. The second portion 214 may be comprised of foam or soft rubber, or any other material that facilitates a proper seal. The second portion 214 comprises slits 260, 262, and 264 extending at least partially down the second portion 214 and configured to receive one or more cables. In some embodiments, the slits 260, 262, and 264 may also be configured to line up with slits 234, 236, and 238 in the first portion 212 when the cable sealing device 200 is assembled, as shown in FIG. 2. Further, the second portion 214 may, in other embodiments, include more or less slits than shown in FIG. 5. The second portion also includes a first plurality of holes 256a, 256b, 256c, and 256d and a second plurality of holes 258a, 258b, 258c, and 258d. The first plurality of holes 256a, 256b, 256c, and 256d and the second plurality of holes 258a, 258b, 258c, and 258d are configured to receive the second frame 206. In some embodiments, the first plurality of holes 256a, 256b, 256c, and 256d and the second plurality of holes 258a, 258b, 258c, and 258d are also configured to line up with the first plurality of holes 252a, 252b, 252c, and 252d and the second plurality of holes 254a, 254b, 254c, and 254d of the first portion 212. In other embodiments, the second portion 214 may not have any holes, and the second portion 214 may interact with the second frame 206 in any other way. In other embodiments, the cable sealing device 200 may not have a second frame at all.

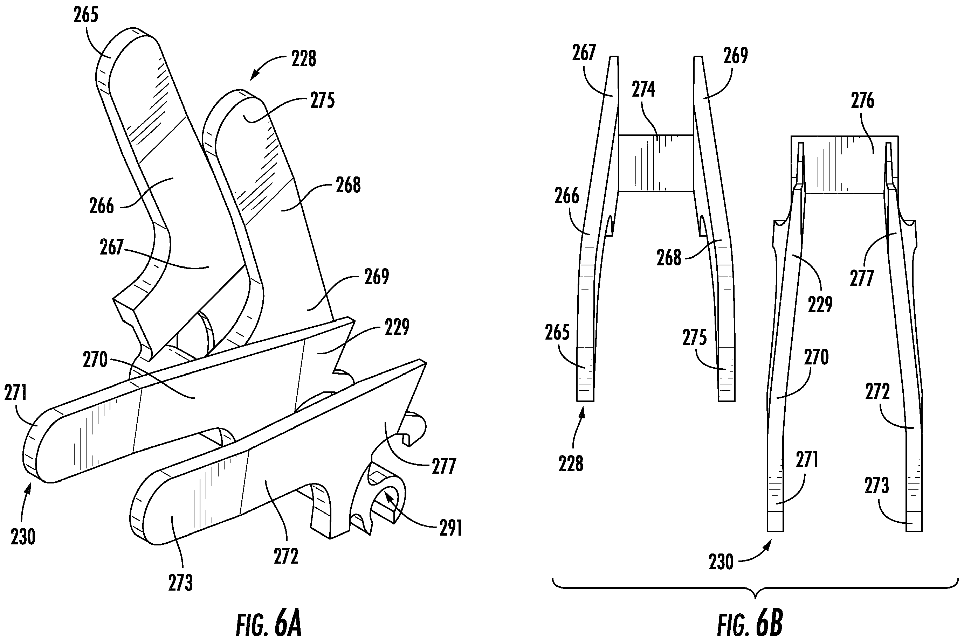

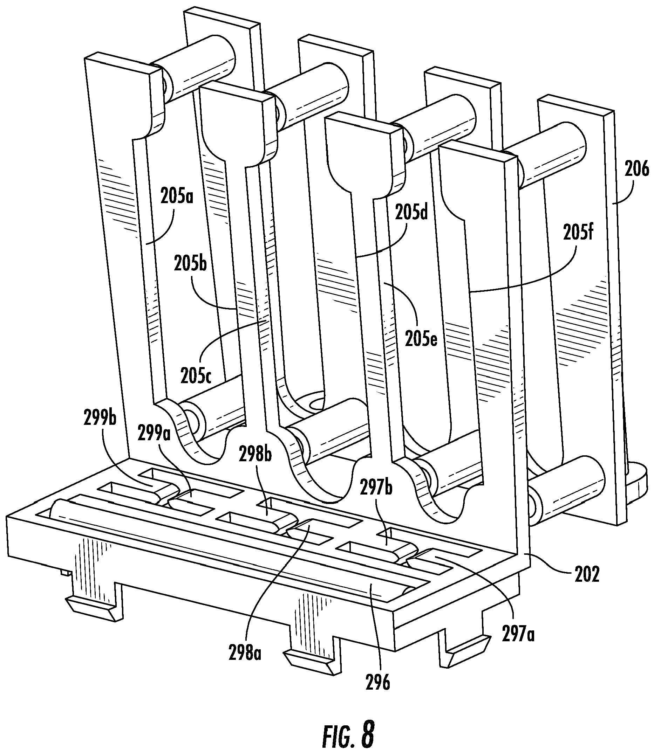

FIGs. 6A-6B show isolated views of levers 228 and 230. Levers 228 and 230 may be comprised of metal material, plastic material, or any other material that facilitates a proper seal. Lever 228 is shown in a sealed position, and lever 230 is shown in an unsealed position, with respect to the configuration shown in FIG. 2. It should be appreciated, however, that in other embodiments, the configuration of lever 230 in FIGs. 6A-6B may be a sealed position and the configuration of lever 228 in FIGs. 6A-6B may be an unsealed position. Lever 228 has a first lever body 266 and a second lever body 268. First lever body 266 of lever 228 has a first end 267 and a second end 265, and second lever body 268 of lever 228 has a first end 269 and a second end 275. Similarly, lever 230 has a first lever body 270 and a second lever body 272. First lever body 270 of lever 230 has a first end 229 and a second end 271, and second lever body 272 of lever 230 has a first end 277 and a second end 273. Levers 228 and 230 are also configured with rotational attachment features 274 and 276 which are configured to receive the first frame 202. For example, rotational attachment feature 276 of lever 230 may be configured to receive a cylindrical feature 296 of the first frame 202 (shown in FIG. 8) at the cylindrical cutout 291.

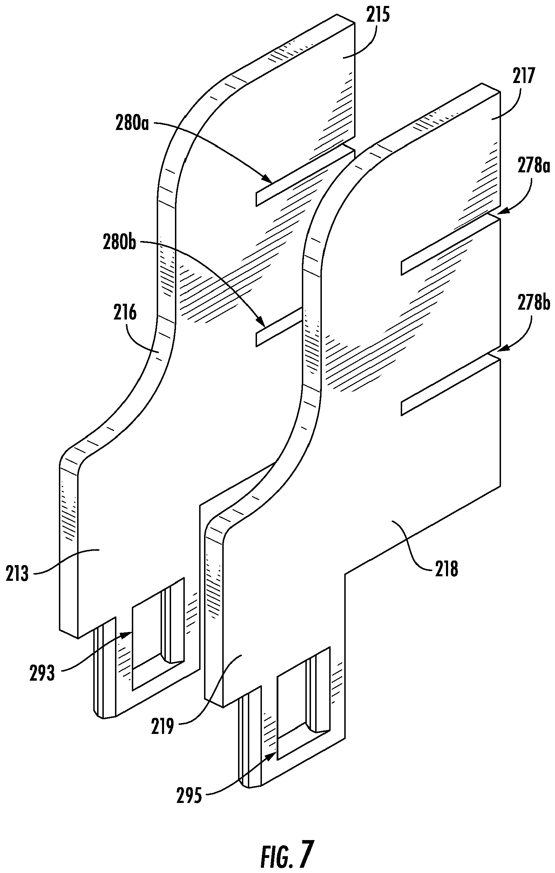

FIG. 7 shows an isolated view of the first crimp element 216 and the second crimp element 218 of the cable sealing device 200 shown in FIGs. 2-3. The first crimp element 216 and the second crimp element 218 may be comprised of metal material, plastic material, or any other material that facilitates a proper seal. The first crimp element 216 has a first end 215 configured to be disposed within an opening of the sealing element assembly 204 (e.g., within the first opening 242 of the first portion 212 of the sealing element assembly 204 of cable sealing device 200, as shown in FIG. 4). Similarly, the second crimp element 218 has a first end 217 configured to be disposed within another opening of the sealing element assembly 204 (e.g., within the second opening 240 of the first portion 212 of the sealing element assembly 204 of cable sealing device 200, as shown in FIG. 4). The first crimp element 216 also has a second end 213 configured to interact with the lever 228. Similarly, the second crimp element 218 has a second end 219 configured to interact with the lever 228.

Referring now to FIGs. 7-8, the first crimp element 216 and the second crimp element 218 are attachable to the first frame 202 using apertures 293 and 295, respectively. For example, the aperture 293 of the first crimp element 216 may be slidable onto a tab 299b of the first frame 202, as shown in FIG. 8. Similarly, the aperture 295 of the second crimp element 218 may be slidable onto a tab 299a of the first frame 202, as also shown in FIG. 8. The crimp elements are attachable such that the crimp elements are still movable with respect to the first frame 202. In other embodiments, the crimp elements may be attachable to the first frame 202 in any other way. Or, in some other embodiments, the cable sealing device 200 may not have a first frame 202 at all.

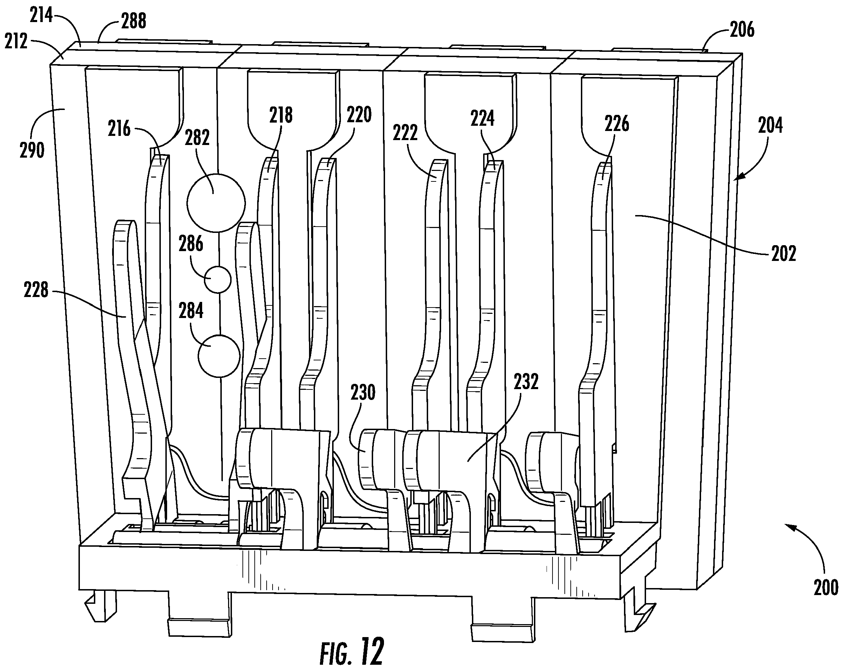

In some embodiments, the first crimp element 216 and the second crimp element 218 also have cutouts 280a, 280b, 278a, and 278b in the first ends 215 and 217, respectively. The cutouts 280a, 280b, 278a, and 278b may allow the cable sealing device to be able to seal different cables with differing diameters within the slits 234 and 260. That is, the cutouts may allow the first crimp element 216 and the second crimp element 218 to be flexible enough to pinch the sealing element assembly around both a cable with a small diameter and a cable with a larger diameter (e.g., as discussed below with respect to FIG. 12).

FIG. 8 shows an isolated view of the first frame 202 and the second frame 206 of the cable sealing device 200 shown in FIGs. 2-3. As described above, the first frame 202 and the second frame 206 are connectable through the first plurality of holes 252a, 252b, 252c, and 252d and the second plurality of holes 254a, 254b, 254c, and 254d in the first portion 212 of the sealing element assembly 204 and the first plurality of holes 256a, 256b, 256c, and 256d and the second plurality of holes 258a, 258b, 258c, and 258d of the second portion 214 of the sealing element assembly 204. In other embodiments, the first frame 202 and the second frame 206 may connect in any other way. The first frame 202 also includes shoulders 205a, 205b, 205c, 205d, 205e, and 205f against which the crimp elements are rotatable. For example, in the embodiment shown, the first crimp element 216 is rotatable against the shoulder 205a when the lever 228 is moved. The first frame 202 also includes tabs 299a, 299b, 298a, 298b, 297a, and 297b. The tabs are configured to receive the apertures of the crimp elements, such as apertures 293 and 295 shown in FIG. 7. The first frame 202 also includes the cylindrical feature 296, which is configured to receive one or more levers. For example, the cylindrical feature is configured to receive the rotational attachment features 274 and 276 of levers 228 and 230, as shown in FIGs. 6A-6B, by way of, e.g., the cylindrical (or rotational) cutout 291.

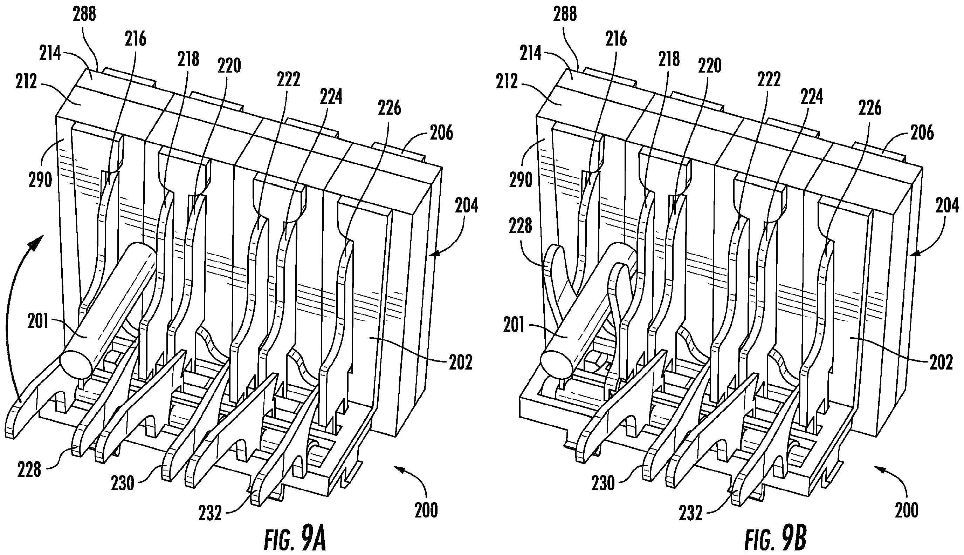

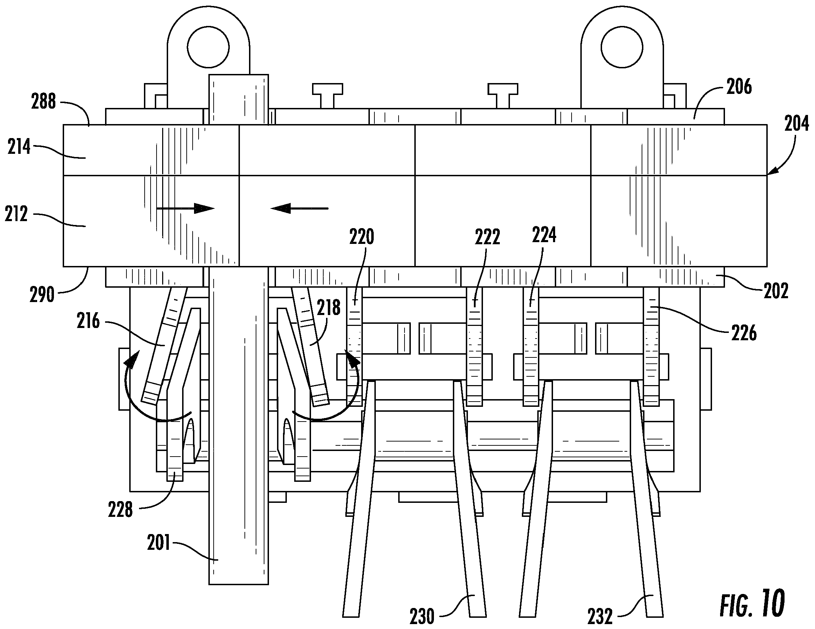

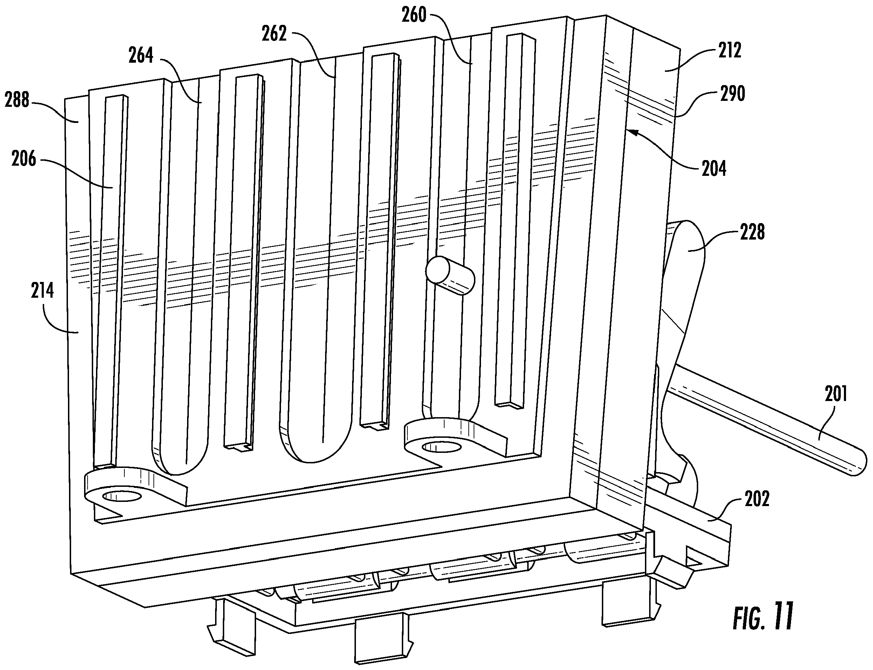

FIGs. 9A-9B and 10-11 illustrate how the cable 201 is sealed by the cable sealing device 200. FIG. 9A shows the cable sealing device 200 in an unsealed position, and FIG. 9B shows the cable sealing device 200 in a sealed position. In the embodiment shown in FIGs. 9A-9B, the lever 228 is moved in an upward rotational direction to move the cable sealing device 200 from the unsealed position to the sealed position with the cable 201 in the slits 234 and 260 of the first portion 212 and the second portion 214, respectively, of the sealing element assembly 204. Referring now to FIGs. 6A-6B, 7, and 10, when the lever 228 is moved from the unsealed position to the sealed position, the first end 267 of the first lever body 266 of the lever 228 contacts and pushes against the second end 213 of the first crimp element 216. Due to interaction with the shoulder 205a (shown in FIG. 8), this causes rotation of the first crimp element 216 such that the first end 215 moves toward the cable 201 in the slit 234. At the same time, the first end 269 of the second lever body 268 of the lever 228 contacts and pushes against the second end 219 of the second crimp element 218. Due to interaction with the shoulder 205b (shown in FIG. 8), this causes rotation of the second crimp element 218 such that the first end 217 (shown in FIG. 7) moves toward the cable 201 in the slit 234. Thus, the first end 215 (shown in FIG. 7) of the first crimp element 216 and the first end 217 of the second crimp element 218 pinch the cable 201 therebetween to secure the cable 201 when the lever 228 is moved to the sealed position. FIG. 11 shows a back perspective view of the cable sealing device 200 with the cable 201 sealed within the slit 234 of the first portion 212 of the sealing element assembly 204 and the slit 260 of the second portion 214 of the sealing element assembly 204.

FIG. 12 shows the cable sealing device 200 with cables 282, 286, and 284 (shown as cross-sections) sealed within the slit 234 of the first portion 212 of the sealing element assembly 204 and the slit 260 of the second portion 214 of the sealing element assembly 204. In the embodiment shown, cables 282, 286, and 284 have differing diameters. For example, the cables 282, 286, and 284 may have diameters that are between 2 and 8 millimeters. In other embodiments, however, the cables 282, 286, and 284 may have diameters that are less than 2 millimeters and/or greater than 8 millimeters. Referring back to FIG. 7, the first crimp element 216 and the second crimp element 218 have cutouts 280a, 280b, 278a, and 278b designed to aid in the sealing of multiple cables, especially when the multiple cables have differing diameters, such as the cables 282, 286, and 284 shown in FIG. 12. More specifically, when the lever 228 is engaged (e.g., moved from the unsealed position to the sealed position), the first lever body 266 causes the first crimp element 216 to rotate toward the slits 234 and 260, and the second lever body 268 causes the second crimp element 218 to rotate toward the slits 234 and 260. When this occurs, the cutouts 280a and 280b allow the first crimp element 216 to bend at varying degrees along the length of the first end 215, and the cutouts 278a and 278b allow the second crimp element 218 to bend at varying degrees along the length of the first end 217 of the second crimp element 218. The variations of bend along the lengths of the first end 215 of the first crimp element 216 and the first end 217 of the second crimp element 218 allow for each cable within the slits 234 and 260 to receive enough compressive force to be sealed within the sealing element assembly 204.

It will be appreciated that single or multiple cables can be sealed within any or all of the slits 234, 260, 236, 262, 238, and 264. For example, in some embodiments, the cable sealing device 200 may be able to seal three or more cables within each of the slits 234 and 260, 236 and 262, and 238 and 264, all at the same time. In other embodiments, the cable sealing device 200 may only be used to seal a single cable (within any one of the slits).

Notably, the cable sealing device 200 may be configured such that a cable (or cables) is/are removable from the cable sealing device. For example, the cable 201 may be placed within the slits 234 and 260 and then sealed by moving the lever 228 from the unsealed position to the sealed position. Subsequently, the lever may be moved from the sealed position to the unsealed position such that the cable 201 may be removed. This may allow for maintenance procedures to be easily completed after initial installation of, e.g., the cable 201.

### Example Flowchart(s)

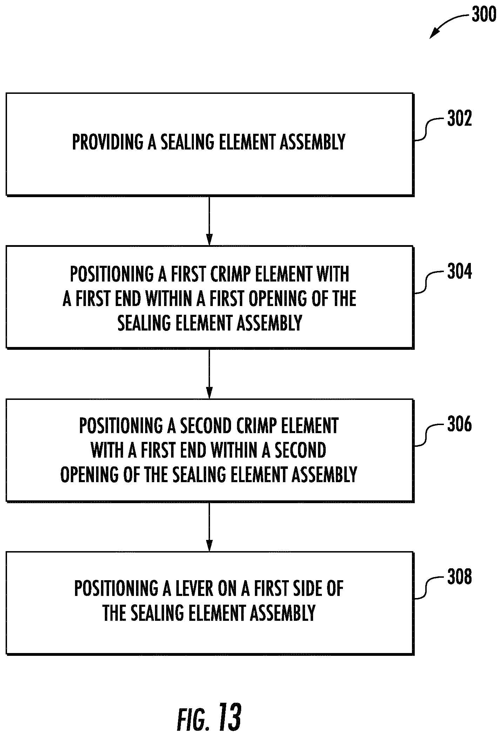

Embodiments of the present disclosure provide various methods for manufacturing a cable sealing device, such as described herein. Various examples of the operations performed in accordance with some embodiments of the present disclosure will now be provided with reference to FIG. 13.

FIG. 13 illustrates a flowchart according to an example method 300 of manufacturing a cable sealing device according to an example embodiment. The method 300 may include providing a sealing element assembly at operation 302. At operation 304, the method comprises positioning a first crimp element with a first end within a first opening of the sealing element assembly, as described herein. At operation 306, the method comprises positioning a second crimp element with a first end within a second opening of the sealing element assembly. At operation 308, the method comprises positioning a lever on a first side of the sealing element assembly. For example, as described in various embodiments herein, the lever may be positioned such that it causes at least one of the first crimp element or the second crimp element to move (e.g., rotate) toward a cable in the sealing element assembly when the lever moves from an unsealed position to a sealed position. Additional manufacturing operations (such as connecting the frames) and/or additional usage operations (such as sealing a cable using the device) are also contemplated.

Unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is no way intended that any particular order be inferred.

### Conclusion

Many modifications and other embodiments of the disclosures set forth herein will come to mind to one skilled in the art to which these present disclosures pertain having the benefit of the teachings presented in the foregoing descriptions and the associated drawings. Therefore, it is to be understood that the embodiments of the present disclosure are not to be limited to the specific embodiments disclosed and that modifications and other embodiments are intended to be included within the scope of the present disclosure. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the present disclosure. In this regard, for example, different combinations of elements and/or functions than those explicitly described above are also contemplated within the scope of the present disclosure. Although specific terms are employed herein, they are used in a generic and descriptive sense only and not for purposes of limitation.

## Claims

1. A device for sealing a cable within a terminal, the device comprising:
a sealing element assembly having a first end and a second end, the second end being opposite the first end, wherein the sealing element assembly comprises:
a slit extending from the first end at least partially toward the second end,
wherein the slit is configured to receive the cable therethrough;
a first opening on a first side of the slit; and
a second opening on a second side of the slit;
a first crimp element with a first end disposed within the first opening;
a second crimp element with a first end disposed within the second opening; and
a lever positioned on a first side of the sealing element assembly opposite the terminal, wherein the lever is movable between an unsealed position and a sealed position, wherein the lever defines at least one lever body that when moved to the sealed position contacts at least one of the first crimp element or the second crimp element so as to cause at least one of the first end of the first crimp element or the first end of the second crimp element to move in a direction that is towards the slit so as to engage with the cable to thereby seal the cable within the slit of the sealing element assembly.

2. The device of claim 1, wherein, when the lever is moved to the sealed position, the first end of the first crimp element and the first end of the second crimp element move toward each other to engage with the cable to thereby seal the cable within the slit of the sealing element assembly.

3. The device of claim 2, wherein the lever further comprises a first lever body and a second lever body, wherein the first lever body has a first end adjacent to the second end of the first crimp element, wherein the second lever body has a first end adjacent to the second end of the second crimp element, and wherein a second end of the first lever body opposite the first end of the first lever body and a second end of the second lever body opposite the first end of the second lever body move upwards to cause the lever to move from the unsealed position to the sealed position to cause the first end of the first lever body to interact with the second end of the first crimp element to force the first end of the first crimp element to move toward the slit and to cause the first end of the second lever body to interact with the second end of the second crimp element to force the first end of the second crimp element to move toward the slit.

4. The device of claim 3, wherein the first lever body and the second lever body are positioned with respect to each other such that the first end of the first lever body and the first end of the second lever body are closer together than are the second end of the first lever body and the second end of the second lever body.

5. The device of any of claims 1-4, wherein the device further comprises a first frame and a second frame, wherein the sealing element assembly is disposed between the first frame and the second frame, wherein the first frame is connectable to the second frame, and wherein the first crimp element, the second crimp element, and the lever are supported by the first frame.

6. The device of claim 5, wherein the first frame defines a shoulder, and wherein at least one of the first crimp element or the second crimp element is configured to rotate about the shoulder.

7. The device of any of claims 1-6, wherein the sealing element assembly has a first portion and a second portion, and wherein the slit extends through the first portion and the second portion of the sealing element assembly, and wherein the first opening and the second opening extend through the first portion of the sealing element assembly.

8. The device of any of claims 1-7, wherein the first opening and the second opening are parallel.

9. The device of claim 8, wherein the first opening, the second opening, and the slit are parallel.

10. The device of any of claims 1-9, wherein the slit of the sealing element assembly is further configured to receive a plurality of cables therealong, and wherein the lever is configured such that, when the lever is moved to the sealed position, the first end of the first crimp element and the first end of the second crimp element move toward each other to engage with the plurality of cables to thereby seal the plurality of cables within the slit of the sealing element assembly.

11. The device of claim 10, wherein each cable within the plurality of cables has a different diameter, wherein the first end of the first crimp element comprises a first plurality of cutouts, and wherein the first end of the second crimp element comprises a second plurality of cutouts, and wherein the first plurality of cutouts and the second plurality of cutouts allow for different levels of compression along a length of the slit to account for sealing cables with different diameters positioned within the slit.

12. The device of any of claims 1-11, wherein the sealing element assembly is comprised of foam or rubber material.

13. The device of any of claims 1-12, wherein the first crimp element, the second crimp element, and the lever are comprised of metal or plastic material.

14. The device of any of claims 1-13, wherein the cable is removable from the sealing element assembly after the lever has been moved into the unsealed position.

15. The device of any of claims 1-14, wherein the device is mountable on an enclosure.
